Europäisches Patentamt

European Patent Office

Office européen des brevets

(11) Publication number: **0 055 124 B1**

**EUROPEAN PATENT SPECIFICATION**

(45) Date of publication of patent specification: **31.01.90**

(51) Int. Cl.⁵: **G 06 F 7/52**

(21) Application number: **81306018.3**

(22) Date of filing: **22.12.81**

(54) **Digital multipliers.**

(30) Priority: **24.12.80 US 219810**
**24.12.80 US 220218**

(43) Date of publication of application:
**30.06.82 Bulletin 82/26**

(45) Publication of the grant of the patent:
**31.01.90 Bulletin 90/05**

(84) Designated Contracting States:
**BE DE FR GB IT NL**

(56) References cited:
**EP-A-0 018 120**
**US-A-3 319 056**

**IBM TECHNICAL DISCLOSURE BULLETIN, vol. 4,
no. 11, April 1962, ARMONK (US), G.A. BLAAUW
et al.: "Table lookup multiplication", pages 35-36**

**R.K. RICHARDS: "ARITHMETIC OPERATIONS IN
DIGITAL COMPUTERS", 1955, Van Nostrand
Comp., NEW YORK (US), pages 247-250**

**ELEKTRONIK, 1979, Nr. 4, p. 63, Franzis Verlag,
München**

(73) Proprietor: **Bull HN Information Systems Inc.**
**300 Concord Road**
**Billerica, MA 01821 (US)**

(72) Inventor: **Negi, Virendra S.**
**64, Park Street**
**Pepperell Massachusetts (US)**
Inventor: **Tague, Steven A.**
**158, Concord Road**
**Billerica Massachusetts (US)**

(74) Representative: **Dost, Wolfgang, Dr.rer.nat.,
Dipl.-Chem. et al**
**Patent- und Rechtsanwälte Bardehle-
Pagenberg-Dost-Altenburg & Partner Postfach
86 06 20**
**D-8000 München 86 (DE)**

Courier Press, Leamington Spa, England.

## Description

The present invention relates to digital multipliers, and more specifically to non-binary serial multipliers.

The process of multiplication with non-binary, e.g. decimal, numbers involves basically forming multiples of the multiplicand in accordance with successive digits of the multiplier, and adding these products into a partial product to obtain eventually the final product.

The principles of decimal multiplication are described e.g. in R. K. Richards: "Arithmetic Operations in Digital Computers", 1955 Van Nostrand Comp., New York.

It is known to form all 9 multiples of the multiplicand initially, but this requires considerable preliminary calculation and storage space. It is also known to form the required products during the course of the additions, by means of stored multiplication tables (up to 9×9, for decimal multiplication). This reduces the amount of preliminary calculation, but involves complications in the detailed scheduling of the various operations which result in the required additions.

The object of the present invention is to provide a multiplication system in which these complications are reduced.

Accordingly the present invention provides a decimal multiplier wherein each multiplier digit of a multiplier register is selected in turn and the products of the selected multiplier digit with the multiplicand digits of a multiplicand register are formed in succession and added by means of a decimal adder into a partial product register, the products being generated as units digits and tens digits on alternate cycles and added into the partial product register during the correspondying cycles, characterized by two carry flip-flops, a units carry flip-flop and a tens carry flip-flop, which are both associated with the adder and selected on alternate cycles for the units and tens addition, respectively.

A multiplication system embodying the invention will now be described, by way of example, with reference to the drawings, in which:-

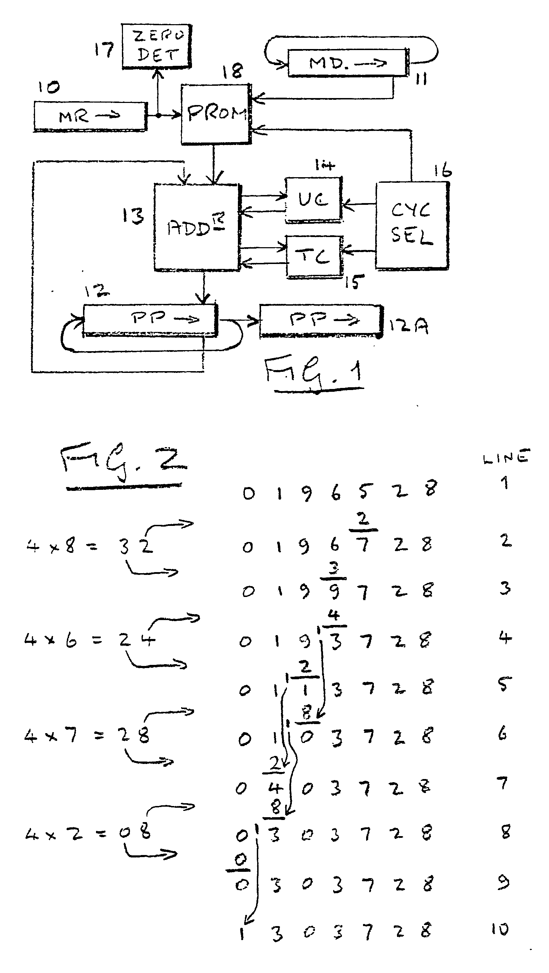

Figure 1 is a block diagram of the multiplication system, and Figure 2 is a table illustrating its operation.

The system includes three registers, a multiplier register 10, a multiplicand register 11, and a partial product register 12 and 12A. The partial product register is divided into two parts, each of which is as long as the registers 10 and 11, as is conventional. The registers are shown as having shift and recirculation functions. This is because the system is a serial by digit system, and successive digits of the contents of the various registers have to be accessed successively. In practice, the registers may be fixed with selection means for selecting the required digit positions therein, and may consist of different areas of a scratch-pad memory.

The two registers 10 and 11 feed a PROM 18, which stores a multiplication table. This in turn feeds an adder 13, which is also fed from the partial product register 12 and feeds back to that register. Two carry flip-flops, a units carry flip-flip 14 and a tens carry flip-flop 15, are coupled to the adder 13. A cycle selector unit 16 is coupled to the PROM 18 and the two carry flip-flops 14 and 15.

Broadly, the system operates as follows. The least significant multiplier digit from register 10 is fed to the PROM 18, and the multiplicand is circulated in the register 11 so that each digit in turn is fed to the PROM 18. The PROM 18 therefore feeds a sequence of products (each of a multiplier digit and a multiplicand digit) to the adder 13. At the same time, the contents of register 12 are circulated, and the successive products from the PROM 13 are added in. After a complete circulation of the registers 11 and 12, the multiplier register 10 is shifted one place to bring the next multiplier digit to its end, and the register 12 is shifted one place to the right into register 12A. When the last digit in register 10 has been used for a multiplication of the multiplicand, registers 12 and 12A together will contain the final product.

The leading feature of the present system is the timing of the additions, which is controlled by the cycle selector unit 16. It will be realized that the product of two decimal digits, a multiplier digit and a multiplicand digit, will normally be 2 digits. Accordingly the cycle selector unit 16 causes the system to operate in units and tens cycles alternately, taking two cycles—a units cycle and a tens cycle—to deal with the product from PROM 12.

Assume that the multiplier is 471 and the multiplicand is 2768. Figure 2 shows the stages of the multiplicand for the final, most significant, multiplier digit. When that digit is reached, the two lower order multiplier digits 7 and 1 have already been used to multiply the multiplicand, and the partial product at that point is 196528, as seen in line 1. At the left of the figure, there are four multiplications shown. The 4 which appears in each is the top multiplier digit, and the multiplicand 2768 can be read upwards from the second digits.

The PROM 18 is fed with the two digits to be multiplied and a cycle signal from unit 16, and is programmed to produce the units digit on the units cycles and the associated tens digit on the tens cycles. The transitions from odd number lines, e.g. line 1, to the next line are a units cycle, and the transitions from even number lines, e.g. line 2, to the next line are tens cycles. The units and tens digits of the products from PROM 18 are dealt with on the units and tens cycles respectively, as indicated by the arrows showing the appropriate digits between the numbered lines.

It is therefore evident that each cycle involves only a single place addition of two digits, e.g. 5+2 to obtain 7 in the 3rd place in lines 1 and 2. The adder 13 can therefore be a basically conventional decimal adder.

There is another notable feature of the present system, in the way in which carriers are handled.

Any addition can produce a carry. In the present system, there are two separate carry flip-flops 14 and 15, which are enabled by the unit 16 on the corresponding cycles. This means that a carry resulting on one cycle is saved during the next cycle, and added in during the next but one cycle.

This is seen from lines 3 to 6 in Figure 2. The units cycle addition 9+4 from line 3 to line 4 produces a carry, shown to the north west of the sum digit 3. This carry is stored in the units carry flip-flop, and ignored during the next following tens cycle, which advances the state of the system from line 4 to line 5. On the next following units cycle, from line 5 to line 6, the units flip-flop carry is added in by the adder 13. Similarly, in passing from line 5 to line 6, the units cycle addition 1+8+1 gives a 0 with a carry 1 (shown just to the north west of the 0), which is stored in the units carry flip-flop and is added in during the next units cycle (lines 7 to 8).

It will be seen from lines 5 and 6 that it is possible for both the carry flip-flops to be set at the same time. That is, the tens carry flip-flop is set on the tens cycle as the system advances from line 4 to line 5, and the units carry flip-flop is set as the system advances from line 5 to line 6. The two carry flip-flops are operative only on their respective cycles, working independently of each other. Each will enter its cycle set if there is a carry in for that cycle, and will leave its cycle set if there is a carry out for that cycle.

As shown in Figure 2, there is a final special units cycle, from line 9 to line 10, in which any carry resulting from the last proper units cycle is added into the partial product to give the final product.

The same register can of course be used for the multiplier register 10 and the partial product register 12A, since the multiplier register 10 empties gradually as the partial product register 12A fills gradually.

A zero detector circuit 17 tests the current multiplier digit for zero, since if it is zero then a complete sequence of additions can be skipped.

The PROM 18 may be a 9 bit input, 4 bit output ROM, the input bits being 4 bits for the multiplier digit, 4 bits for the multiplicand digit, and 1 bit from the cycle selector. Alternatively, it may be an 8 bit input, 8 bit output ROM, producing both digits of the product, followed by a 2×4 bit input, 4 bit output multiplexer controlled by the cycle selector.

The two carry flip-flops may be coupled to the adder by means of a pair of 2×1 bit input, 1 bit output multiplexers controlled by the cycles selector.

## Claims

1. A decimal multiplier wherein each multiplier (MR) digit of a multiplier register (10) is selected in turn and the products of the selected multiplier digit with the multiplicand (MD) digits of a multiplicand register (11) are formed in succession and added by means of a decimal adder (13) into a partial product (PP) register (12), the products being generated as units digits and tens digits on alternate cycles and added into the partial product register (12) during the corresponding cycles, characterized by two carry flips-flops, a units carry flip-flop (14) and a tens carry flip-flop (15), which are both associated with the adder (13) and selected on alternate cycles for the units and tens addition, respectively.

2. A multiplier according to Claim 1, characterised in that the products are formed by means of a ROM (18).

3. A multiplier according to either previous claim, characterized by means (17) for detecting a zero multiplier digit and aborting the sequence of cycles which would normally be associated with that digit.

## Patentansprüche

1. Dezimalmultiplizierer, bei dem jede Multiplikatorziffer (MR) eines Multiplikatorregisters (10) der Reihe nach ausgewählt wird und die Produkte der ausgewählten Multiplikatorziffer mit den Multiplikantenziffern eines Multiplikantenregisters (11) nacheinander gebildet und mit Hilfe eines Dezimaladdierers (13) in ein Teilprodukt (PP)-Register (12) addiert werden, die Produkte als Einerziffern und Zehnerziffern in abwechselnden Zyklen erzeugt und während der entsprechenden Zyklen in das Teilproduktregister eingegeben werden; gekennzeichnet durch zwei Übertrag-Flip-Flops, ein Einerübertrag-Flip-Flop (14) und ein Zehner übertrag-Flip-Flop (15), die beide dem Addierer (13) zugeordnet sind und in abwechselnden Zyklen zur Einer-bzw. Zehner-addition ausgewählt werden.

2. Multiplizierer nach Anspruch 1, dadurch gekennzeichnet, daß die Produkte mit Hilfe eines Lesespeichers ROM (18) gebildet werden.

3. Multiplizierer nach einem der vorangehenden Ansprüche, gekennzeichnet durch Mittel (17) zum Feststellen einer Multiplikatorziffer Null und zur Unterdrückung der normalerweise dieser Ziffer zugeordneten Folge von Zyklen.

## Revendications

1. Un multiplicateur décimal dans lequel chaque chiffre multiplicateur (MR) d'un registre de multiplicateurs (10) est sélectionné à tour de rôle et les produits du chiffre multiplicateur sélectionné avec les chiffres multiplicandes (MD) d'un registre de multiplicandes (11) sont formés successivement et ajoutés au moyen d'un additionneur décimal (13) dans un registre (12) de produit partiel (PP), les produits étant générés en tant que chiffres des unités et chiffres des dizaines lors de cycles alternés et additionnés dans le registre (12) de produit partiel pendant les cycles correspondants, caractérisé par deux bascules de retenue, une bascule de retenue des unités (14) et une bascule de retenue des dizaines (15), qui sont toutes deux associées à l'additionneur (13) et sélectionnées lors de cycles alternés pour l'addition des unités et des dizaines, respectivement.

2. Un multiplicateur selon la revendicaton 1, caractérisé en ce que les produits sont formés au moyen d'une mémoire morte (18).

3. Un multiplicateur selon l'une ou l'autre des revendications précédentes, caractérisé par un moyen (17) de détection d'un chiffre multiplicateur nul et de suspension d'exécution de la séquence des cycles qui seraient normalement associés à ce chiffre.

17 | ZERO DET

18

10 | MR →

PROM

MD. → | 11

13 | ADD\ :R:

14 | UC

16 | CYC SEL

TC | 15

12 | PP →

PP → | 12A

FIG. 1

FIG. 2

|  |  |  |  |  |  |  |  | LINE |
|---|---|---|---|---|---|---|---|------|
|  | 0 | 1 | 9 | 6 | 5 | 2 | 8 | 1 |
| 4 × 8 = 3 2 | 0 | 1 | 9 | 6 | 2/7 | 2 | 8 | 2 |
|  | 0 | 1 | 9 | 3/9 | 7 | 2 | 8 | 3 |
| 4 × 6 = 2 4 | 0 | 1 | 9 | 4/3 | 7 | 2 | 8 | 4 |
|  | 0 | 1 | 2/1 | 3 | 7 | 2 | 8 | 5 |
| 4 × 7 = 2 8 | 0 | 1 | 8/0 | 3 | 7 | 2 | 8 | 6 |
|  | 0 | 2/4 | 0 | 3 | 7 | 2 | 8 | 7 |
| 4 × 2 = 0 8 | 0 | 8/3 | 0 | 3 | 7 | 2 | 8 | 8 |
|  | 0/0 | 3 | 0 | 3 | 7 | 2 | 8 | 9 |
|  | 1 | 3 | 0 | 3 | 7 | 2 | 8 | 10 |